# EUROPEAN PATENT APPLICATION

(11) **EP 1 030 303 A2**
(43) Date of publication of application: **23.08.2000**
(21) Application number: 00103043.6
(22) Date of filing: 15.02.2000
(51) Int. Cl.: G11B 23/00, G11B 23/30, G11B 23/40

(54) **Disk-shaped record carrier provided with a circular identification code**

(30) Priority: 18.02.1999 IT VR990017
(71) Applicant: PERSONAL VIDEO ITALIA di Battilani Giancarlo, 37012 Bussolengo (VR) (IT)
(72) Inventor: Battilani, Giancarlo, 37012 Bussolengo (VR) (IT)
(74) Representative: Petraz, Gilberto

(57) **Abstract**

A disk-shaped record carrier (1), e.g. a CD-ROM or a DVD-ROM, comprises a circular identification code (5) coaxial with the rotation axis (A) of the carrier. Said circular identification code can be constituted by a bar code comprising a series of concentric lines. This allows the code to be read by any optical reader in any position, without unbalancing the disk weight. According to another form of embodiment the identification code is carried by a microchip (8) of a radio frequency transponder (6), whose antenna is circular and coaxial with the rotation axis of the carrier. Therefore, the code may be recognized and read within automatic vending or renting machines of disk-shaped record carriers or juke-boxes.

## Description

The present invention refers to a disk-shaped record carrier.

More particularly, the present invention refers to a disk-shaped record carrier provided with a circular identification code.

The invention finds a main application in the field of distributing, renting and selling of disk-shaped record carriers such as, for instance, record carriers with audio or video tracks, or movies.

### BACKGROUND ART

The use of bar codes optical recognition systems is well known, and they have a remarkable impact on our life. Bar codes are normally applied on wares of any kind, and they carry all the necessary information for identifying said ware, e.g. the price, the date of expiry, the specific characteristics and the origin therof.

When sticked on the packagings of products, bar codes need a relatively small area, and the whole packaging can be used for improving the aesthetical characteristics thereof, making them more attractive and luring the product's purchase.

Moreover, by means of bar codes the manufacturers may better control the market, by imposing their prices and disclosing, together with the products, their characteristics and origin in a simple and direct way.

In supermarkets, retail stores and, generally, any kind of shopping malls, bar codes prevent cashiers from digiting the price of purchased articles, since the optical reader converts the bar code into readable digits .

Some mail sorting systems use bar codes in order to simplify and speed up the correct addressing of letters towards their destination.

However, linear bar code readers involve some disadvantages, since they need to run along rectilinear lines in order to correctly detect the data impressed on the bar codes.

This action is normally carried out by an operator, while in the case of fixed optical readers carried by transport devices of goods, such as conveyors, the bar code may only be read if the goods run along identical paths; moreover, the shape of the goods must be somewhat standardised and suitable for allowing the bar code to be detected and read by the optical reader in such a way that the latter, which is mounted in a fixed position, may read all the lines of the code in order to show on a display or to save in a memory the information relative to a given article.

Thus, it is possible to convey newspapers and magazines and, generally speaking, any matter that is printed on paper having constant dimensions.

However, linear bar codes can hardly be used on articles having a circular or irregular shape, or a shape allowing them to roll or, in a simplier way, a change in their laying position; this is particularly true in the case of articles carried on conveyors.

In the case of goods having a circular or irregular shape, such as for instance fruit and vegetables and similar products that are packaged within sacks or bags, their transport on conveyors makes difficult or even impossible the use of linear bar codes, owing to their irregular placement and to their movement of the conveyor; furthermore, it is almost impossible to orient the bags in such a way that the bar code is read by the optical reader.

In order to set aside this drawback, in the year 1949 Bernard Silver and N.J. Woodland invented the circular bar codes, by means of which a label carrying the bar code can be placed in any position on a packaging, and the latter can be placed in any position on the conveyor's plane; in other words, the packaging may freely be rotated, since a circular bar code may be read from any position. Actually, the reader's light beam should only cross all the lines of the bar code in order to read it.

However, this solution requires the use of several readers placed all around the conveyor, what implies relatively high purchasing and mantainance costs.

Several methods and procedures for printing bar codes are known in the art, see for instance US-A-4,659,415, US-A-4, 706, 095, US-A-5 ,056,429, US-A-5,395,181, JP 05,308,483 and JP 10,295,520.

However, none of the cited patent documents mentions the possibility of placing a circular bar code on a disk-shaped record carrier, e.g. on a compact disk such as an audio disk or a CD-ROM, and so on.

Therefore, there is no patent document or disclosure that describes a disk-shaped record carrier provided with a circular bar code, and this sounds quite astonishing if one considers that this kind of record carrier is mass-produced and universally used.

Disk-shaped record carriers are more and more used; for example, movies recorded on DVD-ROM's are distributed by means of automatic machines that are becoming very popular.

By now, disk-shaped record carriers are identified by rectilinear bar codes placed on their box or container; alternately, rectilinear bar codes are radially placed and directly silk-screen printed on the area comprised-between the recorded area and the disk centre.

However, in the first case the bar code cannot assure that the disk-shaped record carrier contained in a given box is the same as the one referenced by the bar code sticked on that box, once the box seal is removed.

In the second case, the rectilinear bar code may only be read through an operator or turning the optical reader in order to allow the light beam crossing the lines of the bar code.

As far as the present applicant is aware of, there are at present no disk-shaped record carriers provided with circular bar codes, in spite of the important advantages they would involve in certain applications, such as inside of automatic vending or renting machines.

In fact, since modern compact disks rotate at high speed, and the laser beams reading their data are very sensitive, the operation of simply placing or sticking a bar code in form of a label on the disk would unavoidably lead to lacks of balance, as well as to reductions of audio or video quality. In certain cases the disk may not be read owing to the lack of balance caused by the weight difference due to the presence of a label carrying a rectilinear bar code according to the state of the art.

Electromagnetic Radio Frequency IDentification systems (RFID) based upon the use of transponders are known in the art.
However, their use has always been limited to few particular applications such as, for instance, electronic devices capable to prevent the ignition of a car motor if a particular identification code, stored in a transponder contained within the original ignition key, is not recognized; these devices are commonly known as "immobilizers".

The applicant is not aware of any application of transponders to disk-shaped record carriers; however, the application of a transponder to a disk-shaped record carrier could lead to a plurality of advantages, since there were no need to provide laser readers, and a transponder could also be used as anti-burglar device and not only as a particularly useful identification means.

### DESCRIPTION OF THE INVENTION

The present invention aims to set aside the inconveniences and drawbacks which are typical of the prior art.
According to claim 1, this is achieved by providing a record carrier including a circular identification code coaxial with the carrier rotation axis.

The dependent claims outline particularly advantageous forms of embodiment of the present invention.

The circular identification code according to the present invention is advantageously constituted by a circular bar code or by a transponder having a circular antenna coaxial with the rotation, axis of the disk. In this way the code may automatically be read without causing any lack of balance in the disk, and the code may also be read in an easy way within vending or renting machines of audio or video disks, or juke-boxes.

### ILLUSTRATION OF DRAWINGS

Other features and advantages of the invention will become apparent by reading the following description of a form of embodiment of the invention, given as a non-limiting example, with the help of the figures shown in the attached drawings, in which:
figure 1 shows a schematical plan view of a disk-shaped record carrier provided with a circular bar code according to the present invention; and
figure 2 shows a schematical plan view of a disk-shaped record carrier provided with a circular transponder according to the present invention.

### DESCRIPTION OF A FORM OF EMBODIMENT

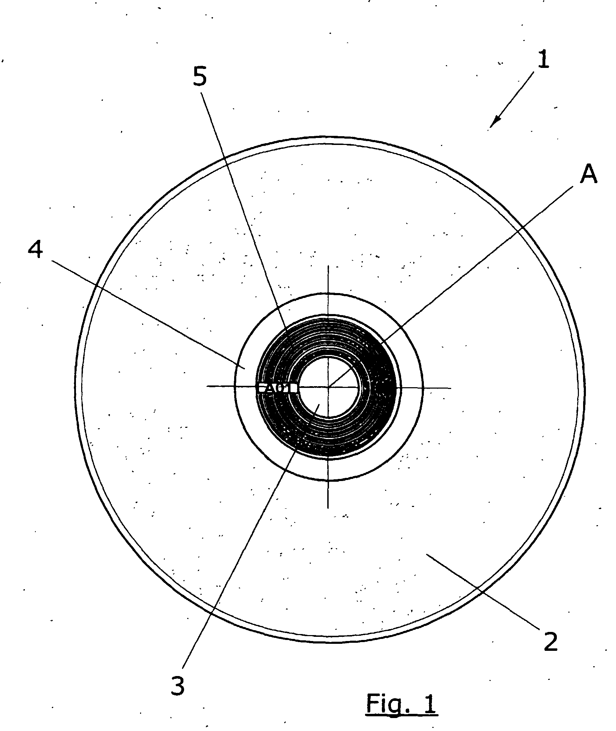

In figure 1, reference sign 1 indicates a *per se* known disk-shaped record carrier 1 such as a compact disk, a CD-ROM, a DVD-ROM etc.

For the purposes of the present invention the wording "disk-shaped record carrier" means any kind of disk-shaped record carrier rotating at a relatively high speed and used for any kind of application.

Record carrier 1 comprises an area 2 onto which information represented by sounds, images or other is coded.

Furthermore, the central area comprises a hole 3 into which is inserted the driving axle of a suitable turntable for-rotating the disk about axis A.

During the rotation, a suitable reader reads data from the record carrier.
Between hole 3 and recorded area 2 the disk-shaped record carrier according to the present invention comprises a supporting-area 4 that is not recorded.
According to this form of embodiment of the invention, area 4 is provided with a disk-shaped label on which a bar code is printed, that is constituted by a series of concentric circular-lines, said bar code being suitable for carrying information associated, for instance, to the characteristics, the origin and the contents of the recorded matter.

According to an essential feature of the invention, the centre 5 of the label with the bar code coincides with the rotation centre of the disk-shaped record carrier 1.

Thus, advantgeously the bar code will not cause any lack of balance to the disk during its quick rotation.

Furthermore, since the bar code is formed by a series of concentric lines, the reader may easily read said code independently from the spatial position of the carrier, thereby overcoming some substantial disadvantages which are typical of the prior art solutions: in fact, in case of a radially placed rectilinear bar code, the reader must follow the arcuated path run by the bars in order to carry out a correct reading, what causes several problems if the bar code is not correctly placed for being read.

According to a form of embodiment of the present invention, the circular bar code is sticked on record carrier 1; therefore, it is previously printed on a material that is suitable for withstanding the thermal conditions which a disk-shaped record carrier is normally subjected to.

According to a further form of embodiment, disk-shaped record carrier 1 according to the present invention is provided with a circular bar code that is either printed or silk-screen printed on its own material.

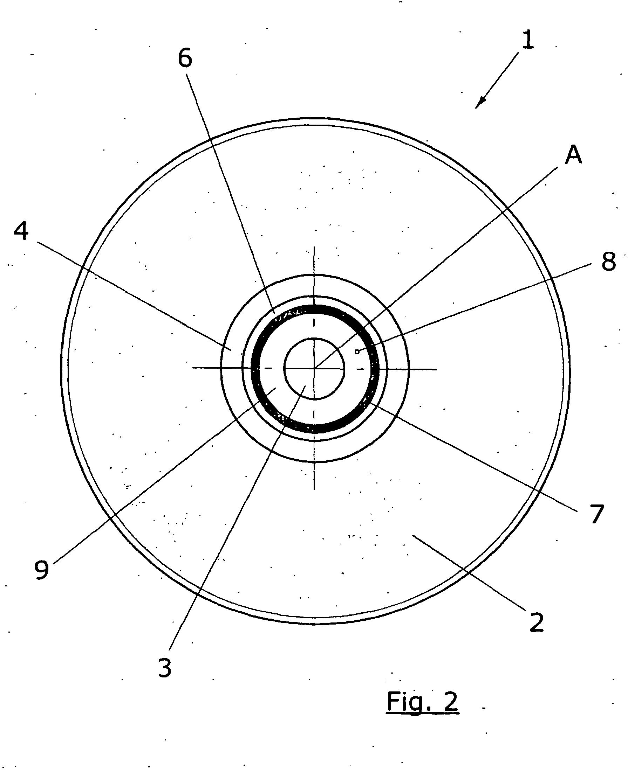

Figure 2 shows a second form of embodiment of the present invention, according to which the disk identification means is constituted by a passive transponder device 6 including a flat circular antenna 7 and a microchip 8, these elements being embedded within a synthetic layer 9; a suitable Electromagnetic Radio Frequency IDentification (RFID) reader (not shown in the figure) will activate microchip 8 and read the data contained therein.

A face of device 6 can be provided with a suitable bonding agent in order to allow device 6 to be easily joined to the surface of disk 1.

It is submitted that this form of embodiment appears to be particularly useful within large department stores, malls etc., since the transponder can also be used as anti-burglar system.

The use of disk-shaped record carriers according to the present invention is advantageously but not exclusively suitable for applications such as automatic vending or renting machines of disk-shaped record carriers.

More particularly, an automatic machine for renting disk-shaped record carriers contains a plurality of record carriers that are housed within individual cartridges provided with a hole allowing the bar code that is printed on the carrier or the transponder antenna to be seen and read.

The carriers, e.g. movies recorded on a DVD-ROM disk, are withdrawn from the machine by a customer who may select them by acting on suitable keyboards and displays.

The recognition of a selected disk is carried out thanks to the presence of a circular identification code according to the present invention, said ID code being either crossed by a light beam of a reader placed in a given fixed position (bar code embodiment), or activated and read by a radio frequency reader (transponde embodiment).
The information which is read allows a grasping device to seize and withdraw the disk from its seat within the machine, and subsequently to insert it again into the same seat once the disk is given by the customer back to the machine.

This operating way is normally carried out by musical juke-boxes; however, it has to be noted that the disks of a juke-box are not delivered to an external customer: they stay within the machine and there is no need to recognize them in order to place them back to their seat once they have been played.

The invention has been previously described with reference to particularly advantageous forms of embodiment thereof.

However, it is clear that the invention is not limited to this form of embodiment, and that it includes any variant that can be carried out within the scope of mechanical equivalences.

## Claims

1. Disk-shaped record carrier (1) characterised that in a central area thereof it comprises a circular identification code (5, 6) coaxial with the rotation axis (A) of the carrier.

2. Disk-shaped record carrier (1) according to claim 1, characterised in that said identification code (5) is formed by a series of concentric circular lines.

3. Disk-shaped record carrier (1) according to claim 2, characterised in that each line is open at both ends.

4. Record carrier (1) according to anyone of the preceding claims, characterised in that the bar code (5) is printed, e.g. by means of silk-screen printing, on the barrier, or it is applied to said carrier by means of suitable bonding agents.

5. Record carrier (1) according to claim 1, characterised in that the identification code is contained within a transponder (6) comprising a circular antenna (7) coaxial with the record carrier rotating axis and a microchip (8).

6. Use of an identification code constituted by concentric circular lines, or by a radio frequency transponder including a circular antenna, as coupled to a disk-shaped record carrier, said concentric circular lines or said circular antenna being coaxial with the carrier's rotation axis (A).

7. Use according to claim 6, as carried out within automatic machines for vending and/or renting said disk-shaped record carriers.

8. Use according to claim 6, within juke-box devices.
